# EUROPÄISCHE PATENTSCHRIFT

(11) **EP 2 250 046 B1**
(45) Veröffentlichungstag und Bekanntmachung des Hinweises auf die Patenterteilung: **22.06.2016**
(21) Anmeldenummer: 09709370.2
(22) Anmeldetag: 09.01.2009
(51) Int. Cl.: B60N 2/16, F16L 41/08, B60N 2/68

(54) **LAGERANORDNUNG**
BEARING ARRANGEMENT
DISPOSITIF À PALIER

(30) Priorität: 05.02.2008 DE 102008007735; 27.05.2008 DE 102008025266
(43) Veröffentlichungstag der Anmeldung: 17.11.2010
(73) Patentinhaber: Johnson Controls GmbH, 51399 Burscheid (DE)
(72) Erfinder: SPRENGER, Erik, 42929 Wernelskirchen (DE)
(74) Vertreter: Schwöbel, Thilo K.
(86) Internationale Anmeldenummer: PCT/EP2009/000079
(87) Internationale Veröffentlichungsnummer: WO 2009/097945

(56) Entgegenhaltungen:
- WO-A1-93/11990
- DE-A1- 2 750 237
- DE-A1- 3 843 909
- DE-A1- 10 329 237
- DE-A1-102004 006 051
- DE-U1- 7 626 528
- FR-A- 2 831 228

## Beschreibung

Die Erfindung betrifft eine Lageranordnung, insbesondere für eine Verstelleinrichtung eines Fahrzeugsitzes sowie ein Montageverfahren für die Lageranordnung.

Lageranordnungen mit einer Lagerbuchse, die mit einem Bauteil verbindbar ist und an deren Innenseite ein Körper lagerbar ist, sind aus dem Stand der Technik, beispielsweise aus der DE 692 04 827 T2 sowie der DE 10 2004 006 051 bekannt. Ferner lehrt DE-A-76 26 528 U1 (Oberbegriff des Anspruchs 1) ein Verbindungselement, das zum Einsetzen in die Öffnung einer Wand bestimmt ist, insbesondere ein Verbindungselement zum Herstellen einer flüssigkeitsleitenden Verbindung zwischen einem Behälter und einer Rohrleitung, mit einem Nippel und mit einer Ringdichtung, die aus elastischem Material besteht, zum Einführen in die Öffnung unter Bildung eines Presssitzes bestimmt ist, wobei das zum Einführen in die Öffnung bestimmte Anschlussende des Nippels einerseits wenigstens einen Wulst aufweist, der sich von diesem Ende ausgehend nach außen erweitert und andererseits mit einem Anschlagflansch versehen ist, wobei das Anschlussende des Nippels derart bemessen ist, dass dieses beim Einpressen des Nippels in die Dichtung den hülsenartigen Fortsatz der Dichtung zufolge der Keilwirkung des Wulstes nach außen stülpt und in Eingriff mit der zugehörenden Kante der Öffnung bringt, und ferner den Flansch der Dichtung mittels des Flansches des Anschlussendes des Nippels gegen die benachbarte Fläche der Wand anpresst. Die Montage dieser Lageranordnungen ist jedoch vergleichsweise schwierig und/oder deren axiale Sicherung unzureichend.

Der Erfindung liegt die Aufgabe zugrunde, eine Lageranordnung für eine Lageranordnung zur Verfügung zu stellen, die die Nachteile des Standes der Technik nicht aufweisen, insbesondere die axiale Sicherung der Lageranordnung zu verbessern, die Zahl der notwendigen Bauteile sowie die Kosten der Lageranordnung zu verringern.

Gelöst wird die Aufgabe mit einer Lageranordnung mit einer Lagerbuchse, die mit einem Bauteil verbindbar ist und an deren Innenseite ein Körper lagerbar ist und die einen Bund aufweist, wobei an dem Bund mindestens ein Spreizmittel, angeordnet ist, das dessen Querschnitt beim Einführen des Körpers zumindest örtlich vergrößert, wobei der Bund eine geringere Wandstärke aufweist als die Lagerbuchse. Erfindungsgemäß weist die Lageranordnung eine Lagerbuchse auf, an deren Innenseite ein Körper beispielsweise eine Welle oder Achse, lagerbar ist. Die Welle ist vorzugsweise drehbar in der Lagerbuchse vorgesehen. Die Innenseite der Lagerbuchse ist an die Form des Körpers, den sie aufnimmt, angepasst. Diese Lagerbuchse, insbesondere deren Außenseite, ist mit einem Bauteil verbindbar. Die Verbindung zwischen dem Bauteil und der Lagerbuchse ist vorzugsweise so gestaltet, dass die Lagerbuchse kein oder nur ein sehr geringes axiales Spiel relativ zu dem Bauteil aufweist und/oder gegenüber dem Bauteil drehgesichert ist. Das Bauteil kann, bezogen auf das Objekt, in dem es eingebaut ist, ortsfest oder beweglich sein.
Die Lagerbuchse weist einen Bund auf, dessen Querschnitt sich beim Einführen des Körpers in die Lagerbuchse zumindest örtlich vergrößert. Vorzugsweise ist diese Verformung zumindest teilweise plastisch. Bei einem kreisförmigen Bund wird dieser zumindest teilweise entlang des Umfangs aufgeweitet.
Durch die Vergrößerung des Querschnitts des Bundes wird die Lagerhülse mit dem Bauteil, das sie umgibt, verbunden. Diese Verbindung sichert die Lagerbuchse relativ zu dem Bauteil vorzugsweise gegen Verdrehung und besonders bevorzugt gegen Verschiebung in zumindest eine axiale Richtung.
Die Aufweitung des Bundes der Lagerbuchse erfolgt erfindungsgemäß durch ein Spreizmittel, das vorzugsweise an der Innenfläche und/oder an der Stirnfläche des Bundes angeordnet ist und vorzugsweise in den freien Querschnitt der Lagerbuchse bzw. des Bundes hineinragt. Beim Einführen des Körpers in die Lagerbuchse gelangt dieser mit den Spreizmitteln in Eingriff und drückt diese nach außen, so dass sich der Querschnitt des Bundes zumindest lokal aufweitet.
Dadurch, dass der Bund eine geringere Wandstärke aufweist als die Lagerbuchse, ist der Bund leichter verformbar, insbesondere ist dessen Querschnitt leichter aufweitbar,. Vorzugsweise ist die Innenfläche des Bundes gegenüber der Innenfläche der Lagerbuchse, an der der Körper anliegt, nach außen versetzt.

Vorzugsweise handelt es sich bei dem Körper um einen Rundkörper, besonders bevorzugt um eine Welle. Dementsprechend ist die Innenseite der Lagerbuchse vorzugsweise eine zylindrische Fläche. Die Welle weist vorzugsweise mindestens einen Vorsprung auf. Dieser Vorsprung dient insbesondere als Anschlag, um die axiale Weglänge, die die Welle in die Lagerbuchse hineingeschoben werden kann, zu begrenzen. Dieser Vorsprung kann beispielweise als Aufweitung gestaltet sein und durch eine Stauchung, durch Hydroforming oder ein anderes Verfahren in die Welle eingearbeitet werden.

Vorzugsweise ist das Spreizmittel rampenförmig ausgebildet. Besonders bevorzugte weist der Bund mehrere Spreizmittel auf, die ganz besonders bevorzugt gleichmäßig über dessen Umfang verteilt sind. Es kann sich dabei um ein kompaktes rampenförmiges Gebilde handeln. Das Spreizmittel kann aber auch rippenförmig ausgebildet sein. Die Neigungsrichtung der Rampe wird so gewählt, dass die Rampe in Einführrichtung des Körpers ansteigt. Die Neigung der Rampe muss nicht gleichmäßig sein sondern kann sich in deren Verlauf ändern oder Absätze aufweisen.

Vorzugsweise wird der Bund beim Einführen des Körpers so aufgeweitet, dass die dem Körper abgewandte Außenseite zumindest teilweise an einer ersten Seite des Bauteils anliegt.

Vorzugsweise weist die Lagerbuchse einen Vorsprung auf, der an einer zweiten Seite des Bauteils anliegt. Die Lagerbuchse wird vorzugsweise so weit in das Bauteil eingeführt, bis der Vorsprung der Lagerbuchse an dem Bauteil anliegt oder der Vorsprung legt sich beim Aufweiten des Bundes an das Bauteil an.

In einer weiteren bevorzugten Ausführungsform der vorliegenden Erfindung ist der Endbereich des Körpers aufweitbar. Der Endbereich des Körpers ist erfindungsgemäß der Teil des Körpers, der sich im Bereich des Bundes befindet und/oder über diesen hinaussteht. Vorzugsweise wird beim Aufweiten dieses Endbereichs der Bund zusätzlich verformt. Die Aufweitung des Endbereichs des Körpers dient vorzugsweise als Axialsicherung des Körpers innerhalb der Lagerbuchse.

Die erfindungsgemäße Lageranordnung eignet sich insbesondere für die Fahrzeuginnenausstattung Vorzugsweise ist sie Teil eines Kraftfahrzeugsitzes, insbesondere dessen Höhenverstellers.

Im Folgenden werden die Erfindungen anhand der Figuren erläutert. Diese Erläuterungen gelten für beide Erfindungsgegenstände gleichermaßen.
- Figur 1: zeigt die Lagerbuchse.
- Figuren 2a - 2c: zeigen die erfindungsgemäße Lageranordnung und deren Montage.

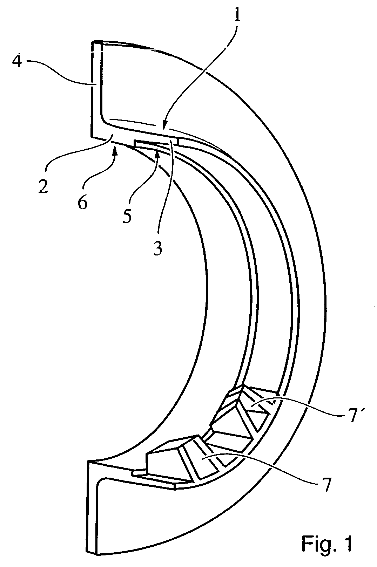

Die in Figur 1 dargestellte Lagerbuchse 1 besteht aus einem Lagerring 2 mit einem daran koaxial vorgesehenen, beispielsweise angeformten, ringförmigen Bund 3. Der Bund 3 ist gegenüber dem Lagerring 2 dünnwandiger ausgebildet, wobei seine radiale Innenfläche 5 gegenüber der radialen Innenfläche 6 des Lagerring 2 radial vorzugsweise nach außen versetzt ist. Auf der dem Bund 3 gegenüber liegenden Seite des Lagerrings 2 ragt ein Vorsprung, hier ein scheibenartiger Kragen 4 radial nach außen ab, so dass die Lagerbuchse 1 einen etwa L-förmigen Querschnitt aufweist.

Vorn Bund 3 ragen Spreizmittel 7, 7' radial nach innen in die freie Querschnittsfläche der Lagerbuchse hinein, welche sich bis über den von der Innenfläche 6 des Lagerrings 2 definierten Durchmesser hinweg vom Lagerring 2 aus keilförmig ansteigend nach innen erstrecken. Die Rampe steigt mit der Einführrichtung des Köpers, beispielweise einer Welle oder Achse, die in die Lagerbuchse eingeführt wird, hier von links nach rechts, an. Das Spreizmittel 7 weist dabei als erstes Ausführungsbeispiel die Form einer kompakten Rampe auf, während das Spreizmittel 7' aus zwei kongruenten Rippen besteht, welche in axialer Richtung verlaufen. Bei mehreren Rippen sind diese vorzugsweise äquidistant angeordnet. Vorzugsweise sind mehrere Spreizmittel 7 und/oder mehrere Gruppen von Spreizmitteln 7' an dem Bund angeordnet. Bei mehr als einem Spreizmittel 7 oder mehr als einer Gruppe von Spreizmitteln 7' sind diese, besonders bevorzugt gleichmäßig über den Umfang verteilt vorgesehen.

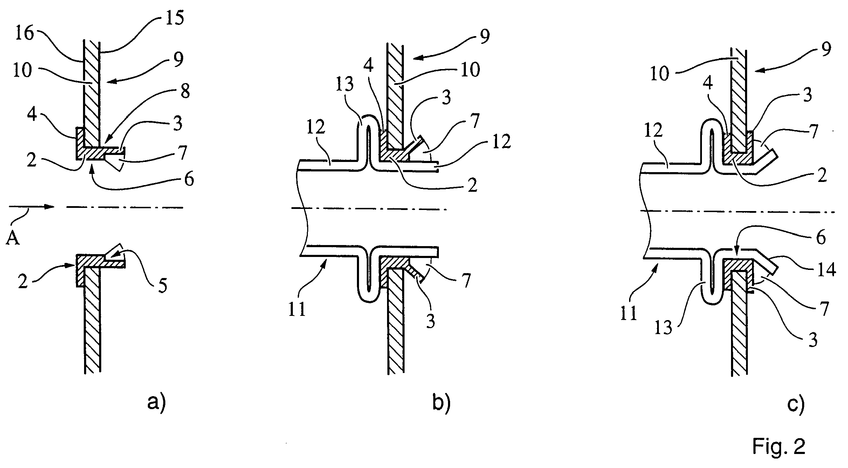

Wie aus Fig. 2a ersichtlich, wird die Lagerbuchse 2 vom Bund 3 her in axialer Richtung (Pfeil A) in die Ausnehmung 8 eines flächigen Bauteils 9, hier eines Seitenholms 10 eines Fahrzeugsitzes, eingeschoben, bis der Kragen 4 an dem flächigen Bauteil 9 anliegt. Anschließend wird der zu lagernde, rohrförmige Rundkörper 11, hier die Welle 12 eines Sitzhöhenverstellers, in der gleichen Richtung in die Lagerbuchse 2 eingeführt, bis eine kragenartige Aufweitung 13 des Rundkörpers 11 am Kragen 4 der Lagerbuchse 1 anliegt. Da der Außendurchmesser des Rundkörpers 11 im Wesentlichen dem Innendurchmesser des Lagerrings 2 entspricht, werden die in diesen Durchmesser hineinragenden Spreizmittel 7 nach außen verlagert und spreizen den Bund 3 dabei auf, was aus Figur 2b ersichtlich ist. Im Ausführungsbeispiel beträgt diese erste Aufspreizung etwa 45°. Im Anschluss erfolgt vorzugsweise ein zusätzliches konisches Aufweiten des Endbereichs 14 des Rundkörpers 11 bis in den Bund 3 hinein, wodurch dieser bis zur Anlage an dem Bauteil 9, also in eine parallel zum Kragen 4 verlaufende Position, gespreizt wird und den Rundkörper 11 relativ zum Bauteil 9 axial sichert, aber deren Drehung zueinander zulässt, was Figur 2c entnommen werden kann.

### Bezugszeichenliste

- 1: Lagerbuchse
- 2: Lagerring
- 3: Bund
- 4: Kragen
- 5: Innenfläche (radial, des Bunds)
- 6: Innenfläche (radial, des Lagerrings)
- 7, 7': Spreizmittel
- 8: Ausnehmung
- 9: Bauteil
- 10: Seitenholm
- 11: Körper, Rundkörper
- 12: Welle
- 13: Vorsprung, Aufweitung
- 14: Endbereich des Körpers 11, 12
- 15: erste Seite des Bauteils 9
- 16: zweite Seite des Bauteils 9

## Patentansprüche

1. Lageranordnung mit einer Lagerbuchse (1), die mit einem Bauteil (9) verbindbar ist und an deren Innenseite (6) ein Körper (11, 12) lagerbar ist und die einen Bund (3) aufweist, wobei an dem Bund (3) mindestens ein Spreizmittel (7, 7') angeordnet ist, das dessen Querschnitt beim Einführen des Körpers (11, 12) zumindest örtlich vergrößert, **dadurch gekennzeichnet, dass** der Bund (3) eine geringere Wandstärke aufweist als die Lagerbuchse (1).

2. Lageranordnung nach Anspruch 1, **dadurch gekennzeichnet, dass** der Körper ein Rundkörper (11), vorzugsweise eine Welle (12) ist.

3. Lageranordnung nach einem der voranstehenden Ansprüche, **dadurch gekennzeichnet, dass** das Spreizmittel (7, 7') rampenförmig ausgebildet ist.

4. Lageranordnung nach einem der voranstehenden Ansprüche, **dadurch gekennzeichnet, dass** es mehrere Spreizmittel (7, 7'), vorzugsweise gleichmäßig über den Bund (3) verteilt aufweist.

5. Lageranordnung nach einem der voranstehenden Ansprüche, **dadurch gekennzeichnet, dass** der Bund (3) zumindest teilweise an einer ersten Seite (15) des Bauteils (9) anliegt.

6. Lageranordnung nach einem der voranstehenden Ansprüche, **dadurch gekennzeichnet, dass** das die Lagerbuchse (1) einen Vorsprung (4) aufweist, der an einer zweiten Seite (16) des Bauteils (9) anliegt.

7. Lageranordnung nach einem der voranstehenden Ansprüche, **dadurch gekennzeichnet, dass** der Endbereich (14) des Körpers (11, 12) aufweitbar ist.

8. Lageranordnung nach Anspruch 7, **dadurch gekennzeichnet, dass** sich beim Aufweiten des Endbereichs (14) der Bund (3) verformt.

9. Lageranordnung nach einem der voranstehenden Ansprüche, **dadurch gekennzeichnet, dass** sie Teil eines Kraftfahrzeugsitzes, insbesondere dessen Höhenverstellers ist.

## Claims

1. Bearing arrangement with a bearing bushing (1) which is connectable to a component (9) and on the inner side (6) of which a body (11, 12) can be mounted and which has a collar (3), wherein at least one expanding means (7, 7') is arranged on the collar (3), said expanding means increasing its cross section, at least locally, when the body (11, 12) is inserted, **characterized in that** the collar (3) has a smaller wall thickness than the bearing bushing (1).

2. Bearing arrangement according to Claim 1, **characterized in that** the body is a round body (11), preferably a shaft (12).

3. Bearing arrangement according to either of the preceding claims, **characterized in that** the expanding means (7, 7') is designed in the shape of a ramp.

4. Bearing arrangement according to one of the preceding claims, **characterized in that** it has a plurality of expanding means (7, 7'), preferably distributed uniformly over the collar (3).

5. Bearing arrangement according to one of the preceding claims, **characterized in that** the collar (3) at least partially bears against a first side (15) of the component (9).

6. Bearing arrangement according to one of the preceding claims, **characterized in that** the bearing bushing (1) has a projection (4) which bears against a second side (16) of the component (9).

7. Bearing arrangement according to one of the preceding claims, **characterized in that** the end region (14) of the body (11, 12) can be widened.

8. Bearing arrangement according to Claim 7, **characterized in that** the collar (3) is deformed during the widening of the end region (14).

9. Bearing arrangement according to one of the preceding claims, **characterized in that** it is part of a motor vehicle seat, in particular of the height adjuster thereof.

## Revendications

1. Agencement de palier comprenant une douille de palier (1) qui peut être connectée à un composant (9) et sur le côté intérieur (6) de laquelle peut être supporté un corps (11, 12) et qui présente un épaulement (3), au moins un moyen d'écartement (7, 7') étant disposé au niveau de l'épaulement (3), lequel augmente au moins localement sa section transversale lors de l'introduction du corps (11, 12), **caractérisé en ce que** l'épaulement (3) présente une plus faible épaisseur de paroi que la douille de palier (1).

2. Agencement de palier selon la revendication 1, **caractérisé en ce que** le corps est un corps rond (11), de préférence un arbre (12).

3. Agencement de palier selon l'une quelconque des revendications précédentes, **caractérisé en ce que** le moyen d'écartement (7, 7') est réalisé en forme de rampe.

4. Agencement de palier selon l'une quelconque des revendications précédentes, **caractérisé en ce qu'**il présente plusieurs moyens d'écartement (7, 7'), de préférence répartis uniformément sur l'épaulement (3).

5. Agencement de palier selon l'une quelconque des revendications précédentes, **caractérisé en ce que** l'épaulement (3) s'applique au moins en partie contre un premier côté (15) du composant (9).

6. Agencement de palier selon l'une quelconque des revendications précédentes, **caractérisé en ce que** la douille de palier (1) présente une saillie (4) qui s'applique contre un deuxième côté (16) du composant (9).

7. Agencement de palier selon l'une quelconque des revendications précédentes, **caractérisé en ce que** la région d'extrémité (14) du corps (11, 12) peut être élargie.

8. Agencement de palier selon la revendication 7, **caractérisé en ce que** l'épaulement (3) se déforme lors de l'écartement de la région d'extrémité (14).

9. Agencement de palier selon l'une quelconque des revendications précédentes, **caractérisé en ce qu'**il fait partie d'un siège de véhicule automobile, en particulier de son dispositif de réglage en hauteur.
